# EUROPÄISCHE PATENTSCHRIFT

(11) **EP 1 599 327 B1**
(45) Veröffentlichungstag und Bekanntmachung des Hinweises auf die Patenterteilung: **03.09.2008**
(21) Anmeldenummer: 04704590.1
(22) Anmeldetag: 23.01.2004
(51) Int. Cl.: B29C 45/16

(54) **VERFAHREN ZUR HERSTELLUNG VON MEHRKOMPONENTIGEN KUNSTSTOFFFORMTEILEN MIT PLASMA-BEHANDLUNG DER VORSPRITZLINGE**
METHOD FOR PRODUCING MULTI-COMPONENT PLASTIC MOULDED PARTS BY TREATING THE PRE-INJECTION MOULDED PARTS WITH PLASMA
PROCEDE DE FABRICATION DE PIECES MOULEES EN PLASTIQUE A PLUSIEURS CONSTITUANTS

(30) Priorität: 28.02.2003 DE 10308742
(43) Veröffentlichungstag der Anmeldung: 30.11.2005
(73) Patentinhaber: KraussMaffei Technologies GmbH, 80997 München (DE)
(72) Erfinder: LANGE, Christoph, 86250 Altomünster (DE)
(74) Vertreter: Wilhelm, Ludwig
(86) Internationale Anmeldenummer: PCT/EP2004/000534
(87) Internationale Veröffentlichungsnummer: WO 2004/076155

(56) Entgegenhaltungen:
- EP-A- 0 870 595
- WO-A-00/23241
- DE-A- 19 540 333
- US-A- 5 759 329
- US-A1- 2001 040 316
- US-A1- 2003 035 974
- AMESOEDER S ET AL: "PLASMA SORGT FUER FESTEN VERBUND" KUNSTSTOFFE, CARL HANSER VERLAG. MUNCHEN, DE, Bd. 93, Nr. 9, 2003, Seiten 124-129, XP001171704 ISSN: 0023-5563
- PATENT ABSTRACTS OF JAPAN Bd. 2000, Nr. 02, 29. Februar 2000 (2000-02-29) -& JP 11 320609 A (SEIKO EPSON CORP), 24. November 1999 (1999-11-24) in der Anmeldung erwähnt
- PATENT ABSTRACTS OF JAPAN Bd. 2000, Nr. 07, 29. September 2000 (2000-09-29) & JP 2000 108205 A (POLYPLASTICS CO), 18. April 2000 (2000-04-18)
- GERSTENBERG K W: "KORONATECHNIK IN DER AUTOMOBILINDUSTRIE THE USE OF CORONA TECHNOLOGY IN THE AUTOMOTIVE INDUSTRY" MO METALLOBERFLACHE, CARL HANSER VERLAG. MUNCHEN, DE, Bd. 51, Nr. 4, 1997, Seiten 240-242, XP001024789 ISSN: 0043-2792

## Beschreibung

Die Erfindung betrifft ein Verfahren zur Herstellung von mehrkomponentigen Kunststoffformteilen aus einer ersten, thermoplastischen Komponente und einer zweiten Komponente aus einem vernetzenden Elastomer.

Aus dem Stand der Technik (JP 11-320609) ist es bekannt, bei der Herstellung von Mehrkomponenten-Spritzgußteilen, die aus jeweils einem thermoplastischen Kunststoff bestehen, die Verbindungskraft zwischen den einzelnen thermoplastischen Komponenten dadurch zu erhöhen, dass vor dem Anformen einer nachfolgenden thermoplastischen Komponente die zuvor spritzgegossene thermoplastische Komponente einem Plasmagasstrom ausgesetzt wird. Als Beispiel wird die Herstellung eines zweikomponentigen Formteils beschrieben, bei dem als erste Komponente eine thermoplastische Hartkomponente und als zweite Komponente ein thermoplastisches Elastomer wie zum Beispiel TPE vorgesehen sind. Nachdem im ersten Spritzschritt das Formteil aus der thermoplastischen Hartkomponente erzeugt worden ist, wird nach Öffnen des Spritzgießwerkzeugs eine Plasmasprüheinrichtung zwischen die Werkzeughälften eingefahren und das Formteil aus der thermoplastischen Hartkomponente mit einem Plasmagasstrahl beaufschlagt. Nach Beendigung der Plasmabeaufschlagung wird die Plasmasprüheinrichtung aus dem geöffneten Spritzgießwerkzeug herausgefahren, die Formhälften werden gedreht und im nächsten Schritt wird in der einen Form an das vorbehandelte Formteil als zweite Komponente ein thermoplastisches Elastomer angespritzt, während in der anderen Form erneut ein Formteil aus der thermoplastischen Hartkomponente erzeugt wird.

Die Herstellung von mehrkomponentigen Kunststoffformteilen aus einem thermoplastischen Kunststoff und einem vernetzenden Elastomer gestaltet sich schwieriger. Die beiden Kunststoffe sind ihrer Art nach so verschieden sind, dass beim Mehrkomponentenspritzgießen dieser beiden Kunststoffe keine oder nur eine ungenügende Haftung zwischen beiden Kunststoffen erzielt werden kann.

Bekannt sind Verfahren, bei denen eine mechanische Verankerung des Elastomers in Hinterschneidungen in der thermoplastischen Komponente vorgesehen wird. (WO 00/23241, US 5,246,065, US 5,160,474). Derartige Hinterschneidungen sind insofern nachteilig, als sie Beschränkungen in der Auslegung der Formteilgestalt zur Folge haben und darüberhinaus die Spritzgießwerkzeuge unnötig kompliziert und damit teuer machen.

Zur Behebung der zuvor genannten Nachteile ist aus der DE 195 40 333 C2 ein Verfahren bekannt, bei dem in einem ersten Spritzschritt die thermoplastische Hartkomponente geformt wird und anschließend im Haftungsbereich eine Koronabehandlung der thermoplastischen Hartkomponente vorgenommen wird. Erst im darauffolgenden Spritzschritt wird die weiche Komponente, die auch ein vernetzendes Elastomer wie z.B. Silikonkautschuk sein kann, angespritzt. Durch die Behandlung der Verbindungsbereiche mittels Korona-Entladung konnte erstmals eine dauerhafte Verbindung zwischen derart unterschiedlichen Kunststoffarten hergestellt werden. Nachteilig an der Koronabehandlung ist, dass die Korona direkt auf das erste Formteil geleitet wird, d.h. die Koronablitze treffen auf die Oberfläche und hinterlassen dort punktuell ihre Spuren. Dies führt zu einer vergleichsweise inhomogenen Behandlung der ersten Komponente, verbunden mit einer örtlich hohen thermischen Belastung. Ausserdem ist die Koronabehandlung schwierig zu kontrollieren, denn die "Blitze" suchen sich ihr Ziel selbst.

Ausgehend hiervon liegt der Erfindung die Aufgabe zugrunde, ein Verfahren anzugeben, das bei gleich guter Verbindung der thermoplastischen Hartkomponente mit dem vernetzenden Elastomer eine geringere Belastung der Hartkomponente ergibt und besser zu kontrollieren ist.

Die Lösung dieser Aufgabe erfolgt durch Verfahren gemäß den Merkmalen der Patentansprüche 1 oder 2. Vorteilhafte Weiterentwicklungen und Ausgestaltungen finden sich in den Unteransprüchen.

Es hat sich überraschender Weise herausgestellt, dass eine dauerhafte Verbidung zwischen einer thermoplastischen Hartkomponente und einem vernetzenden Elastomer auch dann möglich ist, wenn die Hartkomponente mit einem Plasmagasstrom anstelle der schlecht kontrollierbaren Koronabehandlung beaufschlagt wird. Mit dem erfindungsgemäßen Verfahren kann auf umweltschädliche Haftvermittler gänzlich verzichtet werden.

Die thermoplastische Hartkomponente wird üblicherweise in ein gekühltes Werkzeug eingespritzt, während die Kavität für das vernetzende Elastomer geheizt werden muss, damit die Vernetzung erfolgen kann. Für die thermoplastische Hartkomponente kommen unter anderm in Betracht: PC; PA, PBT, PP und andere. Als vernetzende Elastomer findet LSR (Liquid Silicon Rubber) eine breite Anwendung. Aber auch HNBR, NBR, ACM, EPDM, FPM und ähnliche vernetzende Elastomere kommen je nach Anwendungsgebiet zum Einsatz.

Nachfolgend soll die Erfindung anhand der Figuren 1 bis 3 näher erläutert werden. Es zeigen:
- Fig.1: Drehwerkzeug in Draufsicht in geöffnetem Zustand
- Fig.2: Drehwerkzeug im Querschnitt in geöffnetem Zustand
- Fig.3: Plasmadüse

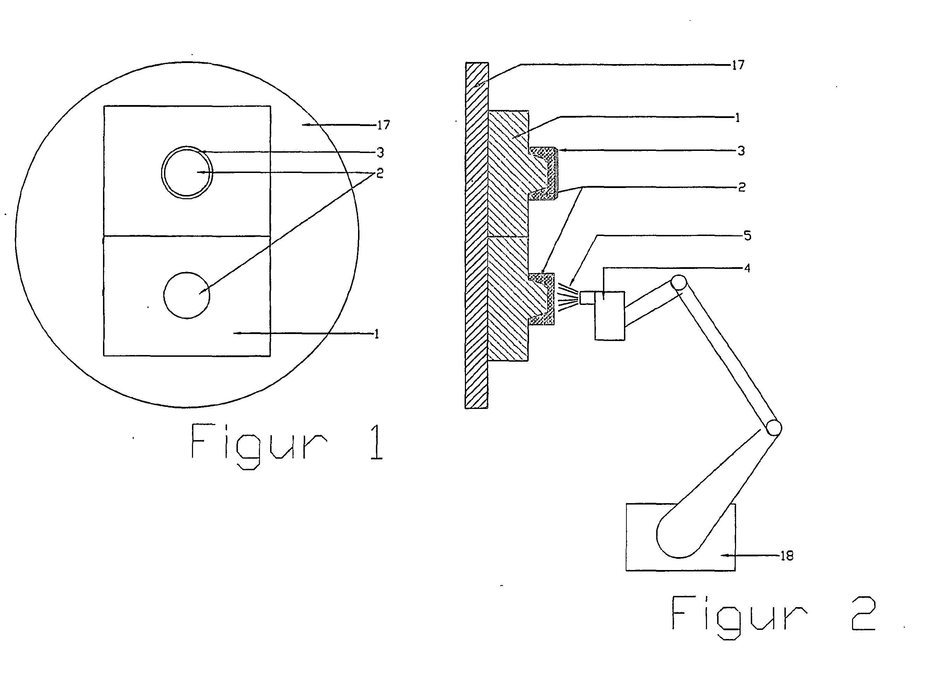

Gemäß den Figuren 1 und 2 ist die untere Formhälfte 1 eines Spritzgießwerkzeugs auf einem Drehteller 17 aufgespannt und kann mit der oberen, hier nicht dargestellten Formhälfte zwei verschiedene Kavitäten bilden. In einer ersten Kavität des Spritzgießwerkzeugs (auf der rechten Seite in den Figuren 1 und 2) wird in einem ersten Spritzschritt ein Vorspritzling 2 aus einer thermoplastischen Hartkomponente hergestellt. Nach dem Öffnen des Spritzgießwerkzeugs wird eine Plasmadüse 4 mittels eines geeigneten Handhabungsgeräts 18 über den Vorspritzling 2 gefahren und dieser mit einem Plasmagasstrom 5 beaufschlagt. Der Drehteller 17 und damit die untere Formhälfte 1 wird anschließend gedreht und wieder geschlossen. Nun kann in einem zweiten Takt in der zweiten Kavität (auf der linken Seite in den Figuren 1 und 2) die zweite Komponente 3 aus dem vernetzenden Elastomer an den Vorspritzling 2 angespritzt werden. Als Vorspritzling kann prinzipiell jedes beliebige Bauteil in Betracht kommen, an dem ein Elastomer anzubringen ist.

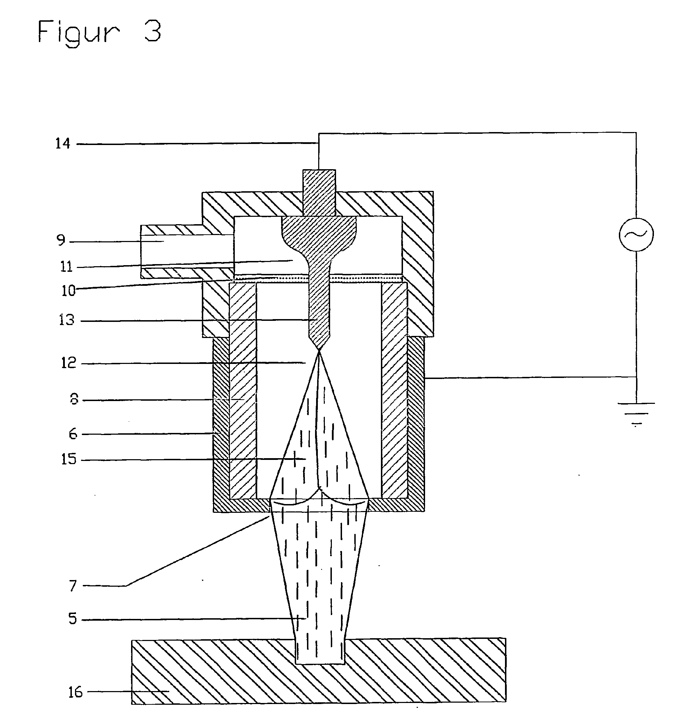

Wie der Figur 3 zu entnehmen ist, weist eine geeignete Plasmadüse 4 ein Edelstahlgehäuse 6 mit einem Düsenkopf 7 und einer Isolationsschicht 8 auf der Innenwand des Gehäuses 6 auf. In den Deckel der Plasmadüse 4 mündet eine Gasleitung 9, die an eine hier nicht dargestellte Gasversorgungsstation angeschlossen ist. Eine Lochblende 10 teilt das Innere des Gehäuses 6 in einen Gaszuführraum 11 und einen Gasentladungsraum 12. An der Lochblende 10 ist eine erste Elektrode 13 angebracht, die über eine Leitung 14 an eine hier nicht dargestellte Hochspannungsquelle angeschlossen ist. Der Düsenkopf 7 des Edelstahlgehäuses 6 wirkt als zweite Elektrode, die geerdet ist. Im eingeschalteten Zustand wird zwischen der Elektrode 13 und dem Düsenkopf 7 ein Plasma 15 gezündet, das aus der Düse austritt und als Plasmagasstrom 5 auf die Oberfläche des Formteils 16 trifft. Mit diesem Plasmagasstrom ist eine gleichmäßige und vergleichsweise schonende Behandlung der Vorspritzlinge möglich.

### Bezugszeichenliste

- 1: Drehwerkzeug - untere Formhälfte
- 2: Erste Komponente (Vorspritzling aus thermoplastischer Hartkomponente)
- 3: Zweite Komponente (vernetzendes Elastomer)
- 4: Plasmadüse
- 5: Plasmagasstrom
- 6: Gehäuse
- 7: Düsenkopf
- 8: Isolationsschicht
- 10: Lochblende
- 11: Gaszuführraum
- 12: Gasentladungsraum
- 13: Elektrode
- 14: Elektrische Leitung
- 15: Gasentladungsstrecke
- 16: Formteiloberfläche
- 17: Drehteller
- 18: Handhabungsgerät

## Patentansprüche

1. Verfahren zur Herstellung eines mehrkomponentigen Kunststoffformteils aus einer ersten, thermoplastischen Komponente und einer zweiten Komponente aus einem vernetzenden Elastomer, wobei auf den Einsatz eines Haftvermittlers im Verbindungsbereich zwischen dem Elastomer und der thermoplastischen Komponente verzichtet wird,
wobei zuerst die thermoplastische Komponente gespritzt wird **dadurch gekennzeichnet, dass** diese nachfolgend und vor dem Anspritzen des vernetzenden Elastomers im Verbindungsbereich mit einem Plasmagasstrom beaufschlagt wird.

2. Verfahren zur Herstellung eines mehrkomponentigen Kunststoffformteils aus einer ersten, thermoplastischen Komponente und einer zweiten Komponente aus einem vernetzenden Elastomer, wobei auf den Einsatz eines Haftvermittlers im Verbindungsbereich zwischen dem Elastomer und der thermoplastischen Komponente verzichtet wird,
**dadurch gekennzeichnet,**
**dass** zuerst die Komponente aus vernetzendem Elastomer gespritzt wird und dass diese nachfolgend und vor dem Anspritzen der thermoplastischen Komponente im Verbindungsbereich mit einem Plasmagasstrom beaufschlagt wird.

3. Verfahren nach Anspruch 1 oder 2,
**dadurch gekennzeichnet**
**dass** als vernetzendes Elastomer LSR, HNBR, NBR, ACM, EPDM oder FPM vorgesehen wird.

4. Verfahren nach einem der Ansprüche 1 bis 3,
**dadurch gekennzeichnet,**
**dass** als thermoplastischer Kunststoff PC, PA, PBT oder PP vorgesehen wird.

5. Verfahen nach einem der Ansprüche 1 bis 4,
**dadurch gekennzeichnet,**
**dass** die Beaufschlagung der thermoplastischen Komponente und/oder des vernetzenden Elastomers innerhalb des Spritzgießwerkzeugs erfolgt.

6. Verfahren nach Anspruch 5,
**dadurch gekennzeichnet,**
**dass** ein Spritgießwerkzeug mit einem Drehteller verwendet wird und dass die Beaufschlagung vorgenommen wird, unmittelbar nachdem der erste Spritzschritt erfolgt ist.

7. Verfahren nach Anspruch 5,
**dadurch gekennzeichnet,**
**dass** ein Spritzgießwerkzeug mit einem Drehteller verwendet wrid und dass die Beaufschlagung vorgenommen wird, nachdem der erste Spritzschritt erfolgt ist und der Vorspritzling aus der thermoplastischen Komponente oder dem vernetzenden Elastomer durch Drehung in die Position für das Anspritzen der nächsten Komponente, nämlich des vernetzenden Elastomers oder der thermoplastischen Komponente, gebracht worden ist.

8. Verfahren nach Anspruch 5,
**dadurch gekennzeichnet,**
**dass** ein Spritzgießwerkzeug mit einem Drehteller verwendet wird und dass eine erste Beaufschlagung mit dem Plasmegasstrom vorgenommen wird, unmittelbar nachdem der erste Spritzschritt erfolgt ist, und dass eine zweite Beaufschlagung mit dem Plasmagasstrom vorgenommen wird, nachdem der bereits behandelte Vorspritzling aus der thermoplastischen Komponente oder dem vernetzenden Elastomer durch Drehung in die Position für das Anspritzen der nächsten Komponente, nämlich des vernetzenden Elastomers oder der thermoplastischen Komponente, gebracht worden ist.

## Claims

1. A method for the production of a multi-component plastic moulded part from a first, thermoplastic component and a second component of a cross-linking elastomer, in which the use of an adhesive agent in the connection region between the elastomer and the thermoplastic component is dispensed with, the thermoplastic component being firstly injected,
**characterized in that**
the latter is acted upon with a plasma gas stream subsequently and before the injecting on of the cross-linking elastomer in the connection region.

2. A method for the production of a multi-component plastic moulded part from a first, thermoplastic component and a second component of a cross-linking elastomer, in which the use of an adhesive agent in the connection region between the elastomer and the thermoplastic component is dispensed with,
**characterized in that**
firstly the component of cross-linking elastomer is injected and that the latter is acted upon with a plasma gas stream subsequently and before the injecting on of the thermoplastic component.

3. The method according to claim 1 or 2,
**characterized in that**
LSR, HNBR, NBR, ACM, EPDM or FPM is provided as cross-linking elastomer.

4. The method according to any of claims 1 to 3,
**characterized in that**
PC, PA, PBT or PP is provided as thermoplastic plastic.

5. The method according to any of claims 1 to 4,
**characterized in that**
the action upon the thermoplastic component and/or on the cross-linking elastomer takes place inside the injection moulding tool.

6. The method according to claim 5,
**characterized in that**
an injection moulding tool with a turntable is used and that the action is carried out immediately after the first injection step has taken place.

7. The method according to claim 5,
**characterized in that**
an injection moulding tool with a turntable is used and that the action is carried out after the first injection step has taken place and the pre-injection-moulded part of the thermoplastic component or of the cross-linking elastomer has been brought by rotation into the position for the injecting on of the next component, namely the cross-linking elastomer or the thermoplastic component.

8. The method according to claim 5,
**characterized in that**
an injection moulding tool with a turntable is used and that a first action with the plasma gas stream is carried out immediately after the first injection step has taken place, and that a second action with the plasma gas stream is carried out after the pre-injection-moulded part of the thermoplastic component or of the cross-linking elastomer which has already been treated has been brought by rotation into the position for the injecting on of the next component, namely the cross-linking elastomer or the thermoplastic component.

## Revendications

1. Procédé de fabrication d'une pièce moulée multicomposants en matière plastique à partir d'un premier composant thermoplastique et d'un deuxième composant en un élastomère réticulant, alors qu'il est renoncé à la mise en oeuvre d'un agent adhésif dans la zone de liaison entre l'élastomère et le composant thermoplastique,
le premier composant thermoplastique étant injecté en premier lieu,
**caractérisé en ce que** ce dernier est soumis ensuite et avant l'injection directe de l'élastomère réticulant dans la zone de liaison à un flux de gaz plasmagène.

2. Procédé de fabrication d'une pièce moulée multicomposants en matière plastique à partir d'un premier composant thermoplastique et d'un deuxième composant en un élastomère réticulant, alors qu'il est renoncé à la mise en oeuvre d'un agent adhésif dans la zone de liaison entre l'élastomère et le composant thermoplastique, **caractérisé en ce que** le composant en élastomère réticulant est injecté en premier lieu et **en ce que** ce dernier est soumis ensuite et avant l'injection directe du composant thermoplastique dans la zone de liaison à un flux de gaz plasmagène.

3. Procédé selon la revendication 1 ou 2,
**caractérisé en ce que**,
il est prévu en tant qu'élastomère réticulant du LSR, du HNBR, du NBR, de l'ACM, de l'EPDM ou du FPM.

4. Procédé selon l'une quelconque des revendications 1 à 3,
**caractérisé en ce que**,
il est prévu en tant que matière thermoplastique du PC, du PA, du PBT ou du PP.

5. Procédé selon l'une quelconque des revendications 1 à 4,
**caractérisé en ce que**,
la mise sous gaz du composant thermoplastique et/ou de l'élastomère réticulant s'effectue à l'intérieur de l'outil de moule à injection.

6. Procédé selon la revendication 5,
**caractérisé en ce que**,
on utilise un moule à injection avec un plateau tournant et **en ce qu'**on procède à la mise sous gaz directement après la première étape d'injection.

7. Procédé selon la revendication 5,
**caractérisé en ce que**,
on utilise un moule à injection avec un plateau tournant et **en ce qu'**on procède à la mise sous gaz lorsque la première étape d'injection a été effectuée et **en ce que** l'ébauche d'injection consistant dans le composant thermoplastique ou dans l'élastomère réticulant a été amenée par rotation dans la position d'injection directe du prochain composant, à savoir de l'élastomère réticulant ou du composant thermoplastique.

8. Procédé selon la revendication 5,
**caractérisé en ce que**,
on utilise un moule à injection avec un plateau tournant et **en ce qu'**on procède à une première mise sous gaz avec le flux de gaz plasmagène directement lorsque la première étape d'injection a été effectuée et **en ce qu'**on procède à une deuxième mise sous gaz avec le flux de gaz plasmagène une fois que l'ébauche d'injection consistant dans le composant thermoplastique ou dans l'élastomère réticulant d'ores et déjà traitée a été amenée par rotation dans la position d'injection directe du prochain composant, à savoir de l'élastomère réticulant ou du composant thermoplastique.
